Europäisches Patentamt

(19) European Patent Office

Office européen des brevets

(11) Publication number: **0 091 828**
**B1**

# (12) EUROPEAN PATENT SPECIFICATION

(45) Date of publication of patent specification: **28.01.87**

(21) Application number: **83302069.6**

(22) Date of filing: **13.04.83**

(51) Int. Cl.⁴: **C 08 G 18/48,** C 08 G 18/50,
C 08 G 18/14

(54) **Process for producing rigid polyurethane foams.**

(30) Priority: **14.04.82 JP 61085/82**

(43) Date of publication of application:
**19.10.83 Bulletin 83/42**

(45) Publication of the grant of the patent:
**28.01.87 Bulletin 87/05**

(84) Designated Contracting States:
**CH DE FR GB IT LI NL SE**

(56) References cited:
**FR-A-1 480 022**
**US-A-3 890 255**

(73) Proprietor: **HITACHI, LTD.**
**6, Kanda Surugadai 4-chome Chiyoda-ku**
**Tokyo 100 (JP)**

(72) Inventor: **Naka, Reishi**
**4006-1, Tomita Ohiramachi**
**Shimotsuga-gun Tochigi-ken (JP)**
Inventor: **Shibata, Katsuo**
**4-7 Sonobecho-4-chome**
**Tochigi-shi (JP)**
Inventor: **Kobayashi, Isao**
**830-23, Ohtsukacho**
**Tochigi-shi (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

EP 0 091 828 B1

**Description**

Field of the Invention
This invention relates to a process for producing a rigid polyurethane foam by a one-shot method which uses a novel polyol component and has excellent fluidity and a shorter demolding time.

Prior Art
Rigid polyurethane foams are in wide use as heat insulating materials such as those used in refrigerators. In appliances such as refrigerators, various investigations have been made for reduction of electricity consumption and as a result it has been found that use of an aromatic amine type polyol and/or a polyester type polyol as a polyol component improves (i.e. decreases) the thermal conductivity of the resulting polyurethane. However, the use of the above type polyol has a drawback in that it worsens fluidity, causes voids and gives a longer demolding time.

Object of the Invention
An object of this invention is to provide a process for producing a rigid polyurethane foam which uses a novel polyol component and retains improved thermal conductivity as well as achieving desirable fluidity and demolding time.

Summary of the Invention
This invention relates to a process for producing a rigid polyurethane foam which uses, as a polyol component, a polyol mixture comprising a tetrafunctional ethylene oxide/propylene oxide adduct of tolylenediamine as major polyol component, a difunctional ethylene oxide/propylene oxide adduct of propylene glycol, a trifunctional ethylene oxide/propylene oxide adduct of diethanolamine and an octafunctional ethylene oxide/propylene oxide adduct of sucrose. This can give the desired thermal conductivity and fluidity as well as a shortened demolding time.

The OH value of the polyol mixture is preferably 450 to 480 because this range gives a stable rigid polyurethane foam, and more preferably 460 to 470. When the value is smaller than 450, the dimensional stability of the resulting polyurethane foam may be markedly poor and, when the value is larger than 480, friability tends to occur in the resulting polyurethane foam. Both of these phenomena become disadvantageous factors in polyurethane foam production.

Reasons for introduction of the difunctional ethylene oxide/propylene oxide adduct of propylene glycol, the trifunctional ethylene oxide/propylene oxide adduct of diethanolamine and the octafunctional ethylene oxide/propylene oxide adduct of sucrose are because the ethylene oxide/propylene oxide adduct of propylene glycol is effective for fluidity improvement, the ethylene oxide/propylene oxide adduct of diethanolamine for fluidity and dimensional stability improvement, and the ethylene oxide/propylene oxide adduct of sucrose for demolding time shortening and dimensional stability improvement. Incidentally, thermal conductivity improvement is achieved by introduction of 30 to 50% of ethylene oxide in addition to conventional propylene oxide as an alkylene oxide.

Examples of the Invention
This invention will be explained in detail by referring to Examples and Comparative Examples. As a raw material fluid for the rigid polyurethane foam of this invention, a conventional raw material fluid can be used except that, as a polyol component, there is used a polyol mixture mentioned earlier. For example, as a blowing agent, there is used trichloromonofluoromethane or water; as a catalyst, there is used a tertiary amine such as dimethylaminoethanol, tetramethylhexanediamine or the like; and as a silicone surfactant, there is used a polyalkylene glycol silicone block copolymer or the like.

Examples 1 to 13 and Comparative Examples 1 to 2
Raw material mixtures each having the following composition were allowed to foam and cure to produce rigid polyurethane foams. As the polyol component in the composition, there were used mixed polyols as shown in Table 1.

| Polyol | 100 | parts by weight |
|---|---|---|
| Water | 1.5 | ,, |
| Silicone surfactant (manufactured by NIPPON UNICAR CO., LTD.) | 1.5 | |
| Catalyst (50% DMAE manufactured by NIPPON NYUKAZAI CO., LTD. + 50% Kaolizer No. 1 manufactured by KAO SOAP CO., LTD.) | 3.5 | ,, |
| Blowing agent (R—11 manufactured by ASAHI GLASS CO., LTD.) | 48 | ,, |
| Isocyanate (Crude MDI) | 148 | ,, |

In Comparative Examples 1 and 2 of Table 1 wherein, as the polyol component, there were used mixtures of an adduct of tolylenediamine with EO/PO, an adduct of propyleneglycol with EO/PO and a polyester polyol, rigid polyurethane foams produced have drawbacks in that they are inferior in fluidity, dimensional stability, friability and thermal conductivity and have longer demolding time. On the other hand, in Examples 1 to 13 of Table 1 wherein, as the polyol component, there were used mixtures of an adduct of tolylenediamine with EO/PO, an adduct of propyleneglycol with EO/PO, an adduct of diethanolamine with EO/PO and an adduct of sucrose with EO/PO, rigid polyurethane foams produced give advantages in that they show improvements in fluidity, dimensional stability, friability and thermal conductivity and have shorter demolding time.

TABLE 1

| | | Example | | | | | | | | | | | | | Comparative Example | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 |
| Polyol | Adduct of tolylenediamine with EO/PO | 64 | 64 | 66 | 66 | 65 | 65 | 64 | 65 | 64 | 66 | 65 | 66 | 66 | 60 | 65 |
| | Adduct of propyleneglycol with EO/PO | 14 | 16 | 14 | 16 | 15 | 14 | 15 | 16 | 15 | 16 | 15 | 15 | 14 | 20 | 25 |
| | Adduct of diethanolamine with EO/PO | 7 | 6 | 6 | 5 | 6 | 7 | 6 | 7 | 7 | 5 | 5 | 5 | 5 | — | — |
| | Adduct of sucrose with EO/PO | 15 | 14 | 14 | 13 | 14 | 13 | 15 | 14 | 14 | 13 | 15 | 14 | 15 | — | — |
| | Polyester polyol (phthalic anhydride type) | — | — | — | — | — | — | — | — | — | — | — | — | — | 20 | 15 |
| Physical Property | (A) Free foam density, Kg/m³ | 21.1 | 21.2 | 21.1 | 21.2 | 21.0 | 21.0 | 21.0 | 21.2 | 21.1 | 21.2 | 21.0 | 21.2 | 21.1 | 21.1 | 21.2 |
| | (B) Panel foam density, Kg/m³ | 28.1 | 28.2 | 28.1 | 28.1 | 28.1 | 28.0 | 28.2 | 28.1 | 28.1 | 28.2 | 28.3 | 28.1 | 28.1 | 31.2 | 31.4 |
| | Fluidity (B—A) | 7.0 | 7.0 | 7.0 | 6.9 | 7.1 | 7.0 | 7.2 | 6.9 | 7.0 | 7.0 | 7.3 | 6.9 | 7.0 | 10.1 | 10.2 |
| | Dimensional stability, % | 0.3 | 0.2 | 0.3 | 0.2 | 0.3 | 0.2 | 0.4 | 0.4 | 0.4 | 0.2 | 0.3 | 0.4 | 0.2 | 6.8 | 7.3 |
| | Friability, % | 8 | 8 | 8 | 9 | 9 | 8 | 8 | 6 | 8 | 8 | 9 | 9 | 9 | 21 | 26 |
| | Heat conductivity, Kcal/m·h·°C | 1.30 | 1.31 | 1.30 | 1.30 | 1.31 | 1.32 | 1.32 | 1.31 | 1.30 | 1.30 | 1.32 | 1.30 | 1.30 | 1.29 | 1.27 |
| | Mold release time, min. | 4 | 4 | 4 | 4 | 4 | 4 | 4 | 4 | 4 | 4 | 4 | 4 | 4 | 7 | 7 |

0 091 828

Footnotes:

o  Average OH value of polyol = 465

o  EO/PO = ethylene oxide / propylene oxide

o  Free foam density

   Inside dimensions = $200 \times 200 \times 200$

   Material = Veneer board

o  Panel foam density

   Inside dimensions: $450 \times 650 \times 30^t$

   Material = Al

o  Dimensional stability

   $450 \times 650 \times 30^t$ panel foam,

   change (%) in thickness direction

   at $-20°C \times 24$ hr.

o  Friability = ASTM—C—421—61

o  Heat conductivity ($\times 10^{-2}$)

   $200 \times 200 \times 30^t$ panel foam,

   Average temperature = 23.8°C

   ANACON 88 type

## Advantages of the Invention

According to this invention, there can be provided rigid polyurethane foams with improved fluidity, dimensional stability, friability and thermal conductivity and shortened demolding time.

## Claims

1. A process for producing a rigid polyurethane foam in a one-shot method by reacting a polyol component with an isocyanate component in the presence of a reaction catalyst, a blowing agent and a silicone surfactant, characterized by using, as said polyol component, a polyol mixture comprising a tetrafunctional ethylene oxide/propylene oxide adduct of tolylenediamine, a difunctional ethylene oxide/propylene oxide adduct of propylene glycol, an octafunctional ethylene oxide/propylene oxide adduct of sucrose and a trifunctional ethylene oxide/propylene oxide adduct of diethanolamine.

2. A process for producing a rigid polyurethane foam according to claim 1, wherein the polyol mixture has an average OH value of 450 to 480.

3. A process for producing a rigid polyurethane foam according to claim 1, wherein the ethylene oxide/propylene oxide adduct of tolylenediamine is 64 to 66% by weight of the polyol mixture, the ethylene oxide/propylene oxide adduct of propylene glycol is 14 to 16% by weight, the ethylene oxide/propylene oxide adduct of sucrose is 13 to 15% by weight and the ethylene oxide/propylene oxide adduct of diethanolamine is 5 to 7% by weight.

## Patentansprüche

1. Verfahren zur Herstellung eines Polyurethan-Hartschaumstoffes in einem Einstufen-Verfahren (one-shot-Verfahren) durch Umsetzen einer Polyolkomponente mit einer Ioscyanatkomponente in Gegenwart eines Reaktionskatalysators, eines Treibmittels und eines Silikons als oberflächenaktives Mittel, dadurch gekennzeichnet, daß als Polyolkomponente ein Polyolgemisch verwendet wird, welches ein tetrafunktionelles Ethylenoxid/Propylenoxid-Addukt von Tolylendiamin, ein bifunktionelles Ethylenoxid/Propylenoxid-Addukt von Propylenglykol, ein octafunktionelles Ethylenoxid/Propylenoxid-Addukt von Saccharose und ein trifunktionelles Ethylenoxid/Propylenoxid-Addukt von Diethanolamin umfaßt.

5

**0 091 828**

2. Verfahren zur Herstellung eines Polyurethan-Hartschaumstoffes gemäß Anspruch 1, bei dem das Polyolgemisch eine durchschnittliche OH-Zahl von 450 bis 480 hat.

3. Verfahren zur Herstellung eines Polyurethan-Hartschaumstoffes gemäß Anspruch 1, bei dem das Ethylenoxid/Propylenoxid-Addukt von Tolylendiamin 64 bis 66 Gew.-%, das Ethylenoxid/Propylenoxid-Addukt von Propylenglykol 14 bis 16 Gew.-%, das Ethylenoxid/Propylenoxid-Addukt der Saccharose 13 bis 15 Gew.-% und das Ethylenoxid/Propylenoxid-Addukt von Diethanolamin 5 bis 7 Gew.-% des Polyolgemisches ausmachen.

**Revendications**

1. Procédé pour fabriquer une mousse de polyuréthane rigide selon un procédé à une seule phase opératoire, en faisant réagir un composé polyvol avec un composé isocyanate en présence d'un catalyseur de réaction, d'un agent moussant et d'un agent tensio-actif silicone, caractérisé en ce qu'on utilise, en tant que composé polyol, un mélange polyol comprenant un produit tétrafonctionnel d'addition de la tolylènediamine avec l'oxyde d'éthylène/l'oxyde de propylène, un produit difonctionnel d'addition du polypropylène-glycol avec l'oxyde d'éthylène/l'oxyde de propylène, un produit octafonctionnel d'addition du saccharose avec l'oxyde d'éthylène/l'oxyde de propylène et un produit trifonctionnel d'addition de la diéthanolamine avec l'oxyde d'éthylène/l'oxyde de propylène.

2. Procédé pour fabriquer une mousse de polyuréthane rigide selon la revendication 1, dans lequel le mélange polyol possède une valeur OH moyenne comprise entre 450 et 480.

3. Procédé pour fabriquer une mousse de polyuréthane rigide selon la revendication 1, selon lequel le produit d'addition de la tolylènediamine avec l'oxyde d'éthylène/l'oxyde de propylène intervient pour 64 à 66% en poids dans le mélange polyol, le produit d'addition du propylène glycole avec l'oxyde d'éthylène/l'oxyde de propylène intervient pour 14 à 16% en poids, le produit d'addition du saccharose avec l'oxyde d'éthylène/l'oxyde de propylène intervient pour 13 à 15% en poids et le produit d'addition de la diéthanolamine avec l'oxyde d'éthylène/l'oxyde de propylène intervient pour 5 à 7% en poids.